# EUROPEAN PATENT APPLICATION

(11) **EP 4 683 395 A1**
(43) Date of publication of application: **21.01.2026**
(21) Application number: 23926709.9
(22) Date of filing: 13.03.2023
(51) Int. Cl.: H04W 52/02

(54) **INFORMATION PROCESSING METHOD, SYSTEM AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/081159
(87) International publication number: WO 2024/187350

(57) **Abstract**

Embodiments of the present invention relate to an information processing method, system and apparatus, a communication device, and a storage medium. The information processing method is executed by a terminal. The method comprises: a terminal is configured to listen for a wake-up signal and is not in an activation time period, and the terminal does not send at least one of a channel state information (CSI) report and a channel sounding reference signal (SRS). In this way, the power consumption of the terminal can be reduced.

## Description

### TECHNICAL FIELD

The present disclosure relates to the field of communication technologies, and in particular, to an information processing method, system, and apparatus, a communication device, and a storage medium.

### BACKGROUND

For different communication requirements, such as power consumption, resource occupation, or a success rate, a plurality of mechanisms are configured for the terminal, and terminals in different mechanisms usually have different communication statuses.

### SUMMARY

Embodiments of the present disclosure provide an information processing method, system and apparatus, a communication device and a storage medium.

A first aspect of the embodiments of the present disclosure provides an information processing method, which is performed by a terminal and includes:
in response to the terminal being configured to monitor a wake-up signal and being not in active time, performing no transmission of at least one of a channel state information (CSI) report and a sounding reference signal (SRS) by the terminal.

A second aspect of the embodiments of the present disclosure provides an information processing method, which is performed by a network device and includes:
in response to a terminal being configured to monitor a wake-up signal and being not in active time, expecting no reception of at least one of a CSI report and an SRS by the network device.

A third aspect of the embodiments of the present disclosure provides an information processing method, applied to an information processing system, where the information processing system includes a terminal and a network device, and the method includes:
in response to the terminal being configured to monitor a wake-up signal and being not in active time, performing, by the terminal, no transmission of at least one of a CSI report and an SRS, and expecting, by the network device, no reception of at least one of the CSI report and the SRS.

A fourth aspect of the embodiments of the present disclosure provides a first information processing apparatus, including:
a first processing module, configured to, in response to a terminal being configured to monitor a wake-up signal and being not in active time, perform no transmission of at least one of a CSI report and an SRS.

A fifth aspect of the embodiments of the present disclosure provides a second information processing apparatus.
a second processing module, configured to, in response to a terminal being configured to monitor a wake-up signal and being not in active time, expect no reception of at least one of a CSI report and an SRS.

A sixth aspect of the embodiments of the present disclosure provides a communication device, including: one or more processors configured to, through calling an instruction, cause the communication device to implement the information processing method according to any one of the foregoing embodiments.

A seventh aspect of the embodiments of the present disclosure provides an information processing system, including: a terminal and a network device;
the terminal is configured to implement the information processing method according to the first aspect; and
the network device is configured to implement the information processing method according to the second aspect.

An eighth aspect of the embodiments of the present disclosure provides a storage medium storing instructions, where the instructions, upon being executed on a communication device, cause the communication device to implement the information processing method according to any one of the foregoing embodiments.

It should be understood that the above general description and the following detailed description are only exemplary and explanatory, but are not to limit the embodiments of the present disclosure.

### BRIEF DESCRIPTION OF THE DRAWINGS

In order to more clearly illustrate the technical solutions in the embodiments of the present disclosure, the drawings required for the description of the embodiments are introduced below. The following drawings are only some embodiments of the present disclosure and do not specifically limit the protection scope of the present disclosure.
FIG. 1 is a block diagram of an information processing system according to an embodiment of the present disclosure.
FIG. 2 is a schematic interaction diagram of an information processing method according to an embodiment of the present disclosure.
FIG. 3 is a flowchart illustrating an information processing method according to an embodiment of the present disclosure.
FIG. 4 is a flowchart illustrating an information processing method according to an embodiment of the present disclosure.
FIG. 5 is a flowchart illustrating an information processing method according to an embodiment of the present disclosure.
FIG. 6a is a flowchart illustrating an information processing method according to an embodiment of the present disclosure.
FIG. 6b is a flowchart illustrating an information processing method according to an embodiment of the present disclosure.
FIG. 6c is a flowchart illustrating an information processing method according to an embodiment of the present disclosure.
FIG. 7a is a block diagram of a first information processing apparatus according to an embodiment of the present disclosure.
FIG. 7b is a block diagram of a second information processing apparatus according to an embodiment of the present disclosure.
FIG. 8a is a block diagram of a communication device according to an exemplary embodiment.
FIG. 8b is a block diagram of a chip structure according to an exemplary embodiment.

### DETAILED DESCRIPTION

In different communication mechanisms of the terminal, to meet requirements such as power consumption, the communication mode is to be restricted to some extent.

Embodiments of the present disclosure provide an information processing method, system and apparatus, a communication device and a storage medium.

In a first aspect, some embodiments of the present disclosure provide an information processing method, which is implemented by a terminal and includes:
in response to the terminal being configured to monitor a wake-up signal and being not in active time, performing no transmission of at least one of a CSI report and an SRS by the terminal.

In the foregoing embodiment, by limiting that the terminal does not send at least one of the CSI report and the SRS in the inactive time corresponding to the wake-up signal monitoring mechanism, the uplink transmission frequency of the terminal in the inactive time can be reduced, the power consumption of the terminal in the inactive time can be saved, the transmission behavior of the terminal in the wake-up signal-based inactive time can be more accurately limited, and the occupation of the uplink channel can be reduced.

With reference to some embodiments of the first aspect, in some embodiments, the SRS includes at least one of the following: a periodic SRS and a semi-persistent SRS.

In the foregoing embodiment, a specific limitation may be imposed on the transmission behavior of SRS that can be actively sent by the terminal, thereby reducing transmission of the periodic SRS and the semi-persistent SRS.

With reference to some embodiments of the first aspect, in some embodiments, the CSI report includes at least one of the following: a periodic CSI report and a semi-persistent CSI report.

In the foregoing embodiment, a specific limitation may be imposed on a transmission behavior of CSI report that can be actively sent by the terminal, thereby reducing transmission of the periodic CSI report and the semi-persistent CSI report.

With reference to some embodiments of the first aspect, in some embodiments, performing no transmission of the CSI report includes:
in response to not receiving a first parameter or in response to receiving the first parameter and the first parameter is not a first value, performing no transmission of the CSI report, where the CSI report includes a layer-1 reference signal receiving power (L1-RSRP).

In the foregoing embodiment, the transmission behavior of CSI report carrying L1-RSRP is limited based on the first parameter, so that reporting of CSI report corresponding to L1-RSRP can be reduced, thereby reducing transmission of some CSI reports more accurately.

With reference to some embodiments of the first aspect, in some embodiments, in response to receiving the first parameter and the first parameter is a first value, transmission of the CSI report is performed, where the CSI report includes L1-RSRP.

In the foregoing embodiment, the CSI report including L1-RSRP is reported based on the first parameter report, and can be used by an entity such as a network device to obtain various channel conditions for communication with the terminal, so that accurate channel information can be used to schedule the terminal after the terminal is woken up. Moreover, the network device can determine a beam for better communication with the terminal based on the carried L1-RSRP, thereby facilitating operations such as beam management.

With reference to some embodiments of the first aspect, in some embodiments, performing no transmission of the CSI report includes:
in response to not receiving a second parameter or in response to receiving the second parameter and the second parameter is not a second value, performing no transmission of the CSI report, where the CSI report does not include L1-RSRP.

In the foregoing embodiment, the transmission behavior of CSI report carrying L1-RSRP is limited based on the second parameter, so that reporting of CSI information can be reduced, thereby reducing transmission of some CSI reports more accurately.

With reference to some embodiments of the first aspect, in some embodiments, in response to receiving the second parameter and the second parameter is a second value, transmission of the CSI report is performed, where the CSI report includes L1-RSRP.

In the foregoing embodiment, CSI information not including L1-RSRP is reported based on the second parameter report, and can be used by an entity such as a network device to obtain various channel conditions for communication with the terminal, so that accurate channel information can be used to schedule the terminal after the terminal is woken up.

With reference to some embodiments of the first aspect, in some embodiments, performing no transmission of at least one of the CSI report and the SRS includes:
performing no transmission of at least one of the CSI report and the SRS on one or more carriers associated with the wake-up signal.

In the foregoing embodiment, accurate limitation of transmission behavior can be performed on the carrier(s) associated with the wake-up signal, thereby reducing impact on transmission behavior of carrier(s) that is not controlled by the wake-up signal, and improving limitation accuracy of the transmission behavior.

In a second aspect, some embodiments of the present disclosure provide an information processing method, which is performed by a network device, and includes:
in response to a terminal being configured to monitor a wake-up signal and being not in active time, expecting no reception of at least one of a CSI report and an SRS by the network device.

With reference to some embodiments of the second aspect, in some embodiments, the SRS includes at least one of the following: a periodic SRS and a semi-persistent SRS.

With reference to some embodiments of the second aspect, in some embodiments, the CSI report includes at least one of the following: a periodic CSI report and a semi-persistent CSI report.

With reference to some embodiments of the second aspect, in some embodiments, in response to not sending a first parameter or in response to sending the first parameter and the first parameter is not a first value, expecting no reception of the CSI report, where the CSI report includes L1-RSRP.

With reference to some embodiments of the second aspect, in some embodiments,
in response to sending the first parameter and the first parameter is the first value, expecting reception of the CSI report, where the CSI report includes L1-RSRP.

With reference to some embodiments of the second aspect, in some embodiments, expecting no reception of the CSI report includes:
in response to not sending a second parameter or in response to sending the second parameter and the second parameter is not a second value, expecting no reception of the CSI report, where the CSI report does not include L1-RSRP.

With reference to some embodiments of the second aspect, in some embodiments,
in response to sending a second parameter and the second parameter is a second value, expecting reception of the CSI report, where the CSI report does not include L1-RSRP.

With reference to some embodiments of the second aspect, in some embodiments, expecting no reception of at least one of the CSI report and the SRS includes:
expecting no reception of at least one of the CSI report and the SRS on one or more carriers associated with the wake-up signal.

In a third aspect, some embodiments of the present disclosure provide an information processing method, which is applied to an information processing system including a terminal and a network device, and includes:
in response to the terminal being configured to monitor a wake-up signal and being not in active time, performing, by the terminal, no transmission of at least one of a CSI report and an SRS, and expecting, by the network device, no reception of at least one of the CSI report and the SRS.

In a fourth aspect, some embodiments of the present disclosure provide a first information processing apparatus, including:
a first processing module, configured to, in response to a terminal being configured to monitor a wake-up signal and being not in active time, perform no transmission of at least one of a CSI report and an SRS.

In a fifth aspect, some embodiments of the present disclosure provide a second information processing apparatus, including:
a second processing module, configured to, in response to a terminal being configured to monitor a wake-up signal and being not in active time, expect no reception of at least one of a CSI report and an SRS.

In a sixth aspect, some embodiments of the present disclosure provide a communication device, including: one or more processors; and one or more memories configured to store instructions, where the processor is configured to invoke the instructions to cause the communication device to perform the information processing method according to the first aspect and the second aspect, and optional implementations of the first aspect and the second aspect.

In a seventh aspect, some embodiments of the present disclosure provide an information processing system, and the system includes: a terminal and a network device; where the terminal is configured to perform the information processing method according to the first and second aspects, and optional implementations of the first and second aspects; and the network device is configured to perform the information processing method according to the first and second aspects, and optional implementations of the first and second aspects.

In an eighth aspect, some embodiments of the present disclosure provide a storage medium storing instructions which, when run on a communication device, cause the communication device to perform the information processing method according to the first aspect and the second aspect, and optional implementations of the first aspect and the second aspect.

In a ninth aspect, some embodiments of the present disclosure provide a program product that, when executed by a communication device, causes the communication device to perform the information processing method according to the first aspect and the second aspect, and optional implementations of the first aspect and the second aspect.

It may be understood that the first information processing apparatus, the second information processing apparatus, the communication device, the information processing system, the storage medium, and the program product may all be configured to perform the method according to the embodiments of the present disclosure. Therefore, for beneficial effects that can be achieved, beneficial effects in some corresponding methods can be referred to, which will not be elaborated here.

Embodiments of the present disclosure provide an information processing method, system and apparatus, a communication device and a storage medium. In some embodiments, the information processing method and the communication method are interchangeable, the information processing apparatus and the communication device are interchangeable, and the information processing system and the communication system are interchangeable.

Embodiments of the present disclosure are not exhaustive, are merely illustrative of some embodiments, and are not intended to specifically limit the protection scope of the present disclosure. In the case of no contradiction, each step in a certain embodiment can be implemented as an independent embodiment, and the steps can be arbitrarily combined. For example, the solution after removing part of the steps in a certain embodiment can also be implemented as an independent embodiment, and the order of the steps in a certain embodiment can be arbitrarily exchanged. In addition, the optional implementations in a certain embodiment can be arbitrarily combined. Moreover, the embodiments can be arbitrarily combined. For example, part or all of the steps in different embodiments can be arbitrarily combined, and a certain embodiment can be arbitrarily combined with some optional implementations of other embodiments.

The terms used in the embodiments of the present disclosure are only for the purpose of describing specific embodiments, and are not intended to limit the present disclosure.

The singular expressions "a", "an", "the", "the above", "said", "the foregoing", "this" and the like in the embodiments of the present disclosure also include plural expressions, unless clearly indicated to the contrary in the context. In the embodiments of the present disclosure, "a plurality of" means two or more.

Prefix words such as "first" and "second" in the embodiments of the present disclosure are only used to distinguish different described objects, and do not constitute a limitation on the position, order, priority, quantity, or content of the described objects. For description of the described objects, reference may be made to the description of the context in the claims or the embodiments, and no redundant limitation should be made due to the use of prefix words. For example, if the described object is a "field", ordinal numbers before the "field" in the "first field" and the "second field" do not limit a location or a sequence of the "field", and the "first" and the "second" do not limit whether the "field" modified by the "first" and the "second" are in a same message, and do not limit a sequence of the "first field" and the "second field". For another example, if the described object is "level", ordinal numbers before "level" in "first level" and "second level" do not limit a priority between the levels. For another example, the number of described objects is not limited by the ordinal number, and may be one or more. Taking "first apparatus" as an example, the number of "apparatus" may be one or more. In addition, objects defined by different prefix words may be the same or different. For example, if a described object is "apparatus", "first apparatus" and "second apparatus" may be the same apparatus or different apparatuses, and types thereof may be the same or different. For another example, if a described object is "information", "first information" and "second information" may be the same information or different information, and content thereof may be the same or different.

Descriptions such as "at least one of A, B, C..." and "A and/or B and/or C..." in the embodiments of the present disclosure include a case in which any one of A, B, C... exists alone, and also include any combination case of any plurality of A, B, C..., where each case may exist alone. For example, "at least one of A, B, and C" includes a case in which A exists alone, B exists alone, C exists alone, a combination of A and B exist, a combination of A and C exist, a combination of B and C exist, and a combination of A and B and C exist. For example, A and/or B includes a case in which A exists alone, B exists alone, a combination of A and B exist.

In some embodiments, "A in one case, B in another case", "in response to a case A, in response to another case B" and the like may include the following technical solutions as proper: A is performed independently of B, that is, A in some embodiments; B is performed independently of A, that is, B in some embodiments; A and B are selectively performed, that is, A or B is selectively applied some embodiments; and A and B are both performed, that is, A and B are applied in some embodiments. When there are more branches such as A, B, and C, the foregoing is also similar.

In some embodiments, "including A", "containing A", "indicating A", and "carrying A" may be interpreted as directly carrying A, or may be interpreted as indirectly indicating A.

In some embodiments, the terms "in response to," "in response to determining...," "in the case of," "while," "when," "if," "in case," and the like may be interchanged.

In some embodiments, terms such as "greater than", "greater than or equal to", "above", "higher than", and "not less than" may be replaced with each other, and terms such as "less than", "less than or equal to", "below", "lower than", and "not greater than" may be replaced with each other.

In some embodiments, terms such as "radio", "wireless", "radio access network (RAN))", "access network (AN)", and "RAN-based" may be replaced with each other.

In some embodiments, "predetermined" and "preset" may be interpreted as being pre-specified in a protocol, or may be interpreted as performing a preset action by a device or the like.

In some embodiments, the apparatus and the like may be interpreted as physical or virtual, and names thereof are not limited to names described in the embodiments. Terms such as "apparatus", "equipment", "device", "network element", "node", "function", "unit", "entity", "system", "chip", "chip system", and "subject" may be replaced with each other.

In some embodiments, names of information and the like are not limited to names described in the embodiments, and terms such as "information", "message", "signaling", "report", "indication", "configuration", and "data" may be replaced with each other.

In some embodiments, "obtaining", "acquiring", "deriving", "receiving", and "transmitting (sending and/or receiving)" may be replaced with each other, and may be interpreted as a plurality of meanings such as receiving from another subject, obtaining from a protocol, and obtaining by self-processing.

In some embodiments, "sending", "reporting", "delivering", and "transmitting (sending and/or receiving)" may be replaced with each other.

In some embodiments, obtaining of data, information, and the like should comply with laws and regulations of the country where the data is located.

In some embodiments, data, information, and the like may be obtained after user consent is confirmed.

In addition, each element, each row, or each column in the table(s) of the embodiments of the present disclosure may be implemented as an independent embodiment, and any combination of any element, any row, or any column may also be implemented as an independent embodiment.

Reference will now be made in detail to exemplary embodiments, examples of which are illustrated in the accompanying drawings. When the following description refers to the accompanying drawings, unless otherwise indicated, the same numbers in different drawings indicate the same or similar elements.

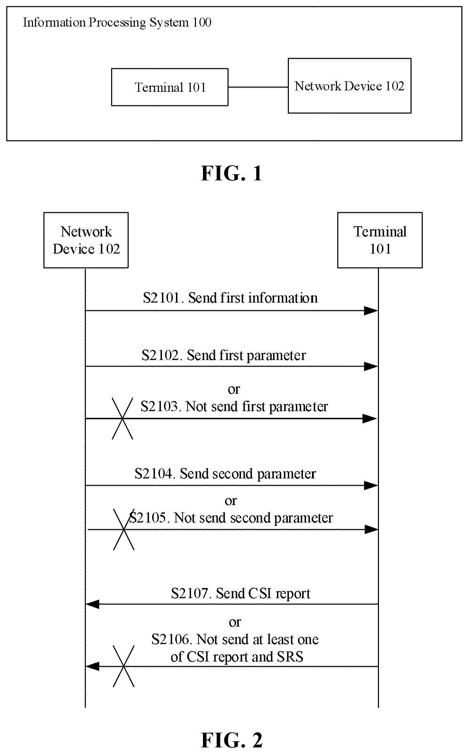

FIG. 1 is a block diagram of an information processing system according to an embodiment of the present disclosure.

The information processing system 100 may include a terminal 101 and a network device 102.

In some embodiments, the information processing system 100 may be a communication system based on a cellular mobile communication technology, for example, a fourth generation mobile communication (4G) system, also referred to as a long term evolution (LTE)) system; or the information processing system 100 may also be a 5G system, also referred to as a new radio (NR) system or a 5G NR system. Alternatively, the information processing system 100 may be still another next generation system of a 5G system. The access network in the 5G system may be referred to as a new generation-radio access network (NG-RAN)). Alternatively, the information processing system 100 may be a machine type communication (MTC) system.

In some embodiments, the terminal 101 is, for example, a terminal device, user equipment (UE), a mobile phone, a wearable device, a vehicle, an internet of things terminal, such as a sensor device, a mobile phone (or referred to as a "cellular" phone), or a computer having an internet of things terminal. For example, it may be a fixed, portable, pocket-sized, handheld, computer built-in, or vehicle-mounted apparatus. For example, it may be a station (STA), a subscriber unit, a subscriber station, a mobile station, a mobile station (mobile), a remote station, an access point, a remote terminal, an access terminal, a user device, or a user agent. Alternatively, the terminal 101 may be a device of an unmanned aerial vehicle. Alternatively, the terminal 101 may be a vehicle-mounted device, for example, may be a vehicle computer having a wireless communication function, or a wireless communication device connected to an external vehicle computer. Alternatively, the terminal 101 may be a roadside device, for example, a street lamp, a signal light, or another roadside device having a wireless communication function, but is not limited thereto.

In some embodiments, the network device 102 may include at least one of an access network device and a core network device. Optionally, the access network device may be a base station, for example, may be an evolved access device (eNB) used in a 4G system, or may be an access device (gNB) using a centralized and distributed architecture in a 5G system, or may be a base station in still another next generation system, or may be another device. Optionally, the core network device may be one device, including one or more network elements, or may be a plurality of devices or device groups, including all or some of the one or more network elements. The network element may be virtual or physical.

In some implementations, when the network device 102 uses a centralized and distributed architecture, the network device 102 usually includes a central unit (CU) and at least two distributed units (DUs). The central unit is provided with a protocol stack consisting of a packet data convergence protocol (PDCP) layer, a radio link control protocol (RLC) layer, and a media access control (MAC) layer. The distributed unit is provided with a physical (PHY)) layer protocol stack. Specific implementation of the network device 102 is not limited in the embodiments of the present disclosure.

In some embodiments, a wireless connection may be established between the network device 102 and the terminal 101 through a wireless air interface. In different implementations, the wireless air interface is a wireless air interface based on a 4th generation mobile communications network technology (4G) standard; or the wireless air interface is a wireless air interface based on a 5th generation mobile communications network technology (5G) standard, for example, the wireless air interface is a new air interface; or the wireless air interface may be a wireless air interface based on a next-generation mobile communications network technology standard of 5G.

The following embodiments of the present disclosure may be applied to the information processing system 100 shown in FIG. 1 or some entity(s) therein, but are not limited thereto. The entities shown in FIG. 1 are examples, and the information processing system may include all or part of the entities in FIG. 1, or may include other entities than FIG. 1. Optionally, the number of the entities is arbitrary, and the connection relationship between the entities is exemplary. The entities may not be connected or may be connected, and the connection may be in any manner, for example, a direct connection or an indirect connection, a wired connection or a wireless connection.

In some embodiments of the present disclosure, in order to reduce the overall power consumption of the terminal 101, optionally, the state of the terminal 101 may be configured through a low power wake up signal (LP WUS). For example, the terminal 101 may receive LP WUS by using a separate low power wake up receiver (LP WUR).

In some embodiments, when the terminal 101 receives LP WUS indication to wake up, the terminal 101 may enter the active time, and turn on the main transceiver for receiving and processing a downlink signal. When the terminal 101 is not in the active time, for example, after the terminal 101 enters the inactive time after failing to detect the information with respect to the terminal 101 for a period of time, if the terminal 101 does not receive LP WUS, or receives LP WUS indicating not to wake up, the terminal 101 remains in the inactive time (that is, the terminal 101 is not in the active time), and monitors LP WUS by using the low-power wake-up signal receiver.

In some embodiments, the network device 102 may configure an LP WUS for the terminal 101 in a radio resource control connected (RRC connected) state.

In some embodiments, when the terminal 101 is not in the active time, the terminal 101 may not monitor all or some downlink channels, for example, may not monitor the physical downlink control channel (PDCCH).

FIG. 2 is a schematic interaction diagram illustrating an information processing method according to an embodiment of the present disclosure. As shown in FIG. 2, an embodiment of the present disclosure relates to an information processing method for an information processing system 100.

In step S2101, the network device 102 sends first information to the terminal 101.

In some embodiments, the first information may be used to configure the terminal 101, causing the terminal 101 to monitor a first signal.

In some embodiments, the first information may be configuration information, indication information, or other types of information, for example, the first information may be wake-up signal configuration information.

In some embodiments, the first information may include or indicate information such as a parameter or an identifier of the first signal.

In some embodiments, the step of sending first information may include a step of sending first signaling. The first signaling may include or carry the first information. Optionally, a name of the first signaling is not limited, and may be, for example, downlink control information (DCI), radio resource control (RRC) signaling, or signaling in another form.

In some embodiments, the terminal 101 receives the first information sent by the network device 102.

In some embodiments, the first signal may be a wake-up signal, where the wake-up signal is, for example, LP WUS.

In some embodiments, the first signal may be used to instruct the terminal 101 to wake up or not to wake up. For example, instructing the terminal 101 to wake up may include instructing the terminal 101 to enter the active time, and instructing the terminal 101 not to wake up may include instructing the terminal 101 to remain in the inactive time.

In some embodiments, the first signal may be sent by the network device 102 to the terminal 101, but may also be sent by another entity to the terminal 101, for example, forwarded, through another entity, by the network device 102 to the terminal 101.

In step S2102, the network device 102 sends a first parameter to the terminal 101.

In some embodiments, the terminal 101 receives the first parameter sent by the network device 102.

In some embodiments, the terminal 101 does not receive the first parameter sent by the network device 102. For example, because transmission data is lost, a channel is blocked, or another reason, the terminal 101 does not receive the first parameter after the network device 102 sends the first parameter.

In some embodiments, the first parameter is used by the terminal 101 to determine whether to send a CSI report including L1-RSRP.

In some embodiments, the first parameter may include one or more indication bits, for example, including one or more bits. Optionally, the first parameter may include one or more indication bits in second information. For example, the second information may be information such as configuration information, indication information, or control information, and a type, content, or a form of the second information is not limited herein. Optionally, the second information and the first information may be same information.

In some embodiments, the first parameter may be further used by the terminal to determine at least one of an occasion and a manner of sending the CSI report including L1-RSRP. For example, the first parameter includes at least two indication bits, where the first indication bit indicates whether to send the CSI report including L1-RSRP, and the second indication bit indicates at least one of the occasion and the manner of sending the CSI report including L1-RSRP. A form and content of the first parameter are not specifically limited herein.

In some embodiments, the step of sending the first parameter may include a step of sending second signaling. The second signaling may include or carry the first parameter. Optionally, a name of the second signaling is not limited, for example, may be DCI signaling, RRC signaling, or signaling in another form. Optionally, the second signaling may be the same as the first signaling, for example, same signaling or same type of signaling as the first signaling.

In some embodiments, the first parameter may be or may not be a first value. Optionally, the first value may be a value specified in a protocol, or may be a value determined by the network device 102 or the terminal 101, or may be a value determined by the network device 102 and the terminal 101 through negotiation. Optionally, the first value may be a specific preselected value of the first parameter, for example, "True" or "False".

In some embodiments, the first parameter may be a predetermined parameter that indicates the terminal 101 to send or not send the CSI report, for example, may be "ps-TransmitPeriodicL1-RSRP", or the like.

In step S2103, the network device 102 does not send the first parameter to the terminal 101.

In some embodiments, the terminal 101 does not receive the first parameter.

In some embodiments, the network device 102 performs step S2102 without performing step S2103.

In some embodiments, the network device 102 performs step S2103 without performing step S2102.

In step S2104, the network device 102 sends a second parameter to the terminal 101.

In some embodiments, the terminal 101 receives the second parameter sent by the network device 102.

In some embodiments, the terminal 101 does not receive the second parameter sent by the network device 102. For example, because transmission data is lost, a channel is blocked, or another reason, the terminal 101 does not receive the second parameter after the network device 102 sends the second parameter.

In some embodiments, the second parameter is used by the terminal 101 to determine whether to send a CSI report that does not include L1-RSRP.

In some embodiments, the second parameter may include one or more indication bits, for example, including one or more bits. Optionally, the second parameter may include one or more indication bits in third information. For example, the third information may be information such as configuration information, indication information, or control information, and a type, content, or a form of the third information is not limited herein. Optionally, the third information and the second information may be same information.

In some embodiments, the second parameter may also be used by the terminal to determine at least one of an occasion and a manner of sending the CSI report without L1-RSRP. For example, the second parameter includes at least two indication bits, where the first indication bit indicates whether to send the CSI report without L1-RSRP, and the second indication bit indicates at least one of the occasion and the manner of sending the CSI report without L1-RSRP. A form and content of the second parameter are not specifically limited herein.

In some embodiments, the step of sending the second parameter may include a step of sending third signaling. The third signaling may include or carry the second parameter. Optionally, a name of the third signaling is not limited, for example, may be DCI signaling, RRC signaling, or signaling in another form. Optionally, the third signaling may be the same as the second signaling, for example, same signaling or same type of signaling as the second signaling.

In some embodiments, the second parameter may be or may not be a second value.

Optionally, the second value may be a value specified in a protocol, or may be a value determined by the network device 102 or the terminal 101, or may be a value determined by the network device 102 and the terminal 101 through negotiation.

Optionally, the second value may be the same as or different from the first value.

Optionally, the second value may be a specific preselected value of the second parameter, for example, "True" or "False".

In some embodiments, the second parameter may be a predetermined parameter that indicates the terminal 101 to send or not to send a CSI report, for example, may be "ps-TransmitPeriodicCSI", or the like.
in step S2105, the network device 102 does not send the second parameter to the terminal 101.

In some embodiments, the terminal 101 does not receive the second parameter.

In some embodiments, the network device 102 performs step S2104 without performing step S2105.

In some embodiments, the network device 102 performs step S2105 without performing step S2104.

In step S2106, the terminal 101 does not send at least one of the CSI report and the SRS to the network device 102.

In some embodiments, in a case that the terminal 101 is configured to monitor the first signal and is not within the active time, the terminal 101 does not send at least one of the CSI report and the SRS to the network device 102. Optionally, when receiving the first parameter and the first parameter is the first value, the terminal 101 sends the CSI report to the network device 102, where the CSI report includes L1-RSRP. Optionally, when receiving the second parameter and the second parameter is the second value, the terminal 101 sends the CSI report to the network device 102, where the CSI report does not include L1-RSRP.

In some embodiments, the network device 102 does not expect to receive at least one of the CSI report and the SRS. Optionally, when sending the first parameter and the first parameter is the first value, the network device 102 expects to receive a CSI report, where the CSI report includes L1-RSRP. Optionally, when sending the second parameter and the second parameter is the second value, the network device 102 expects to receive the CSI report, where the CSI report does not include L1-RSRP. Optionally, when referring to that the network device 102 expects to receive at least one of the CSI report and the SRS, it may mean that the network device 102 receives at least one of the CSI report and the SRS.

In some embodiments, when the terminal 101 does not receive the first parameter or receives the first parameter and the first parameter is not the first value, the terminal 101 does not send the CSI report to the network device 102, where the CSI report includes L1-RSRP.

In some embodiments, the network device 102 does not expect to receive the CSI report when the first parameter is not sent or the first parameter is sent and the first parameter is not the first value, where the CSI report includes L1-RSRP.

In some embodiments, when the terminal 101 does not receive the second parameter or receives the second parameter and the second parameter is not the second value, the terminal 101 does not send the CSI report to the network device 102, where the CSI report does not include L1-RSRP.

In some embodiments, when the network device 102 does not send the second parameter or sends the second parameter and the second parameter is not the second value, the network device 102 does not expect to receive the CSI report, where the CSI report does not include L1-RSRP.

In some embodiments, the terminal 101 does not transmit at least one of the CSI report and the SRS on one or more carriers associated with the first signal. Optionally, the terminal 101 sends at least one of the CSI report and the SRS on one or more carriers not associated with the first signal.

In some embodiments, the network device 102 does not expect to receive at least one of the CSI report and the SRS on the one or more carriers associated with the first signal. Optionally, the network device 102 expects to receive at least one of the CSI report and the SRS on one or more carriers not associated with the first signal.

Optionally, the one or more carriers associated with the first signal may be one or more carriers applied in inactive time or active time corresponding to the first signal, for example, the wake-up signal.

Optionally, the one or more carriers not associated with the first signal may be one or more carriers not applied in inactive time or active time corresponding to the first signal, for example, the wake-up signal.

In some embodiments, the terminal 101 is in inactive time, that is, the terminal 101 is not in active time. The inactive time corresponding to the first signal may be that the terminal 101 monitors the first signal and is not in the active time, for example, the terminal 101 keeps in the inactive time based on the first signal after receiving the first signal.

In some embodiments, the one or more carriers may be one or more carrier groups.

Optionally, the one or more carriers or carrier groups may be configured by the network device 102.

In some embodiments, the CSI report including L1-RSRP may be at least one of a periodic CSI report and a semi-persistent CSI report, so that the terminal 101 may periodically report and/or semi-persistently report the CSI report including L1-RSRP to the network device 102.

In some embodiments, the CSI report not including L1-RSRP may be at least one of a periodic CSI report and a semi-persistent CSI report, so that the terminal 101 may periodically report and/or semi-persistently report CSI information to the network device 102.

In some embodiments, the CSI report may include one or more report parameters, which may include CSI information, for example, may include at least one of channel quality indicator (CQI), precoding matrix indicator (PMI), CSI reference signal resource indicator (CRI), synchronization signal/physical broadcast channel block indicator (SSBRI), layer indicator (LI), rank indicator (RI), L1-RSRP, L1 Signal-to-Interferential plus Noise Ratio (L1-SINR), and a capability set indicator.

In some embodiments, the SRS may include periodic SRS and/or semi-persistent SRS.

In some embodiments, the CSI report may include a periodic CSI report and/or a semi-persistent CSI report. Optionally, the periodic CSI report includes a periodic CSI report on PUCCH, and the semi-persistent CSI report includes at least one of a semi-persistent CSI report on physical uplink shared channel (PUSCH) and a semi-persistent CSI report on PUCCH.

In step S2107, the terminal 101 sends a CSI report to the network device 102.

In some embodiments, when receiving the first parameter and the first parameter is the first value, the terminal 101 sends a CSI report to the network device 102, where the CSI report includes L1-RSRP. Optionally, when the terminal 101 does not receive the first parameter or receives the first parameter and the first parameter is not the first value, the terminal 101 does not send the CSI report to the network device 102, where the CSI report includes L1-RSRP.

In some embodiments, when sending the first parameter and the first parameter is the first value, the network device 102 expects to receive a CSI report, where the CSI report includes L1-RSRP. Optionally, the network device 102 does not expect to receive the CSI report when the first parameter is not sent or the first parameter is sent and the first parameter is not the first value, where the CSI report includes L1-RSRP.

In some embodiments, when receiving the second parameter and the second parameter is the second value, the terminal 101 sends the CSI report to the network device 102, where the CSI report does not include L1-RSRP. Optionally, when the terminal 101 does not receive the second parameter or receives the second parameter and the second parameter is not the second value, the terminal 101 does not send the CSI report to the network device 102, where the CSI report does not include L1-RSRP.

In some embodiments, when sending the second parameter and the second parameter is the second value, the network device 102 expects to receive a CSI report, where the CSI report does not include L1-RSRP. Optionally, when not sending the second parameter or sending the second parameter and the second parameter is not the second value, the network device 102 does not expect to receive the CSI report, and the CSI report does not include L1-RSRP.

In some embodiments, the terminal 101 transmits at least one of the CSI report and the SRS on one or more carriers not associated with the first signal. Optionally, the terminal 101 does not send at least one of the CSI report and the SRS on one or more carriers associated with the first signal.

In some embodiments, the network device 102 expects to receive at least one of the CSI report and the SRS on one or more carriers not associated with the first signal. Optionally, the network device 102 does not expect to receive at least one of the CSI report and the SRS on the one or more carriers associated with the first signal.

In some embodiments, the terminal 101 performs step S2106 without performing step S2107.

In some embodiments, the terminal 101 performs step S2107 without performing step S2106.

In some embodiments, the network device 102 sends a first parameter to the terminal 101, the terminal 101 receives the first parameter and the first parameter is not the first value, then the terminal 101 does not send a CSI report to the network device 102, where the CSI report includes L1-RSRP.

In some embodiments, the network device 102 sends a first parameter to the terminal 101, the terminal 101 receives the first parameter and the first parameter is the first value, then the terminal 101 sends a CSI report to the network device 102, where the CSI report includes L1-RSRP.

In some embodiments, the network device 102 sends the first parameter to the terminal 101, the terminal 101 does not receive the first parameter, then the terminal 101 does not send the CSI report to the network device 102, where the CSI report includes L1-RSRP.

In some embodiments, the network device 102 does not send the first parameter to the terminal 101, the terminal 101 does not receive the first parameter, and the terminal 101 does not send the CSI report to the network device 102, where the CSI report includes L1-RSRP.

In some embodiments, the network device 102 sends a second parameter to the terminal 101, the terminal 101 receives the second parameter and the second parameter is not a second value, then the terminal 101 does not send the CSI report to the network device 102, where the CSI report does not include L1-RSRP.

In some embodiments, the network device 102 sends the second parameter to the terminal 101, the terminal 101 receives the second parameter and the second parameter is the second value, then the terminal 101 sends a CSI report to the network device 102, where the CSI report does not include L1-RSRP.

In some embodiments, the network device 102 sends the second parameter to the terminal 101, the terminal 101 does not receive the second parameter, then the terminal 101 does not send the CSI report to the network device 102, where the CSI report does not include L1-RSRP.

In some embodiments, the network device 102 does not send the second parameter to the terminal 101, the terminal 101 does not receive the second parameter, and the terminal 101 does not send the CSI report to the network device 102, where the CSI report does not include L1-RSRP.

In some embodiments of the present disclosure, step S2101 may be implemented as an independent embodiment, step S2102 may be implemented as an independent embodiment, step S2103 may be implemented as an independent embodiment, step S2104 may be implemented as an independent embodiment, step S2105 may be implemented as an independent embodiment, step S2106 may be implemented as an independent embodiment, step S2107 may be implemented as an independent embodiment, step S2102 + step S2104 may be implemented as an independent embodiment, step S2102 + step S2105 may be implemented as an independent embodiment, step S2103 + step S2104 may be implemented as an independent embodiment, step S2103 + step S2105 may be implemented as an independent embodiment, step S2102 + step S2106 may be implemented as an independent embodiment, step S2103 + step S2106 may be implemented as an independent embodiment, step S2104 + step S2106 may be implemented as an independent embodiment, step S2105 + step S2106 may be implemented as an independent embodiment, step S2102 + step S2107 may be implemented as an independent embodiment, step S2104 + step S2107 may be implemented as an independent embodiment, step S2102 + step S2104 + step S2106 may be implemented as an independent embodiment, step S2102 + step S2105 + step S2106 may be implemented as an independent embodiment, step S2103 + step S2104+ step S2106 may be implemented as an independent embodiment, step S2103 + step S2105 + step S2106 may be implemented as an independent embodiment, step S2102 + step S2104 + step S2107 may be implemented as an independent embodiment, step S2101 + step S2102 + step S2104 + step S2106 may be implemented as an independent embodiment, but not limited thereto.

In some embodiments, steps S2101, S2102, S2103, S2104, S2105, S2107 are optional, and one or more of these steps may be omitted or replaced in different embodiments.

In some embodiments, steps S2101, S2102, S2103, S2104, S2105, S2106 are optional, and one or more of these steps may be omitted or replaced in different embodiments.

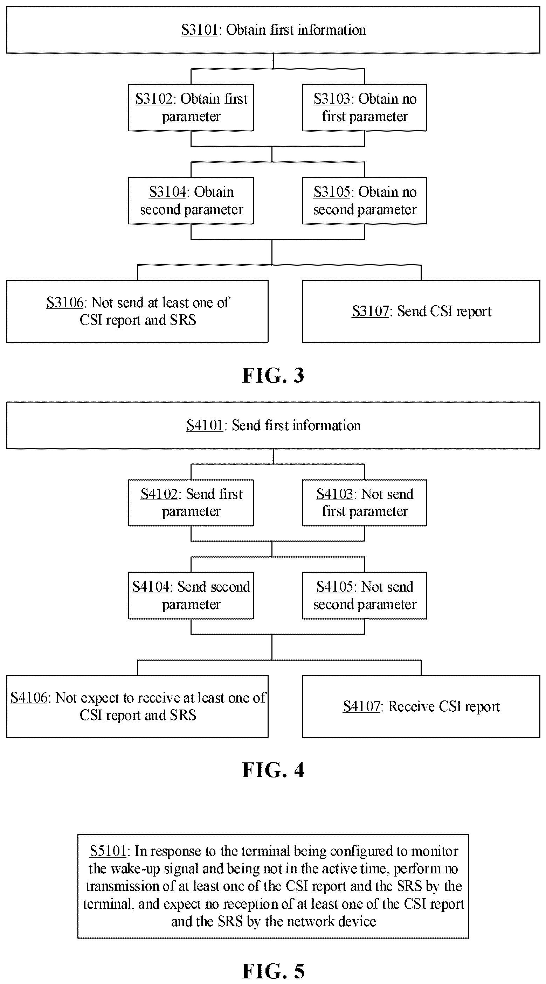

FIG. 3 is a flowchart illustrating an information processing method according to an embodiment of the present disclosure. As shown in FIG. 3, an embodiment of the present disclosure relates to an information processing method performed by a terminal 101, where the method includes the following step(s).

In step S3101, first information is obtained.

Optionally, the terminal 101 may obtain the first information sent by the network device 102, or may receive the first information sent by another entity. For example, the first information may be forwarded by the network device 102 through another entity.

In some implementations, the terminal 101 obtains the first information specified in a protocol.

In some implementations, the terminal 101 performs processing to obtain the first information.

In some implementations, step S3101 is omitted, and the terminal 101 autonomously implements the function indicated by the first information, or the function is autonomous or by default.

For optional implementations of step S3101, the optional implementations of step S2101 in FIG. 2 and another associated part in the embodiments of FIG. 2 may be referred to, and details will not be repeated here.

In step S3102, a first parameter is obtained.

In some embodiments, the terminal 101 may receive the first parameter sent by the network device 102, or may receive the first parameter sent by another entity. For example, the first parameter may be forwarded by the network device 102 through another entity.

In some implementations, the terminal 101 obtains the first parameter specified by a protocol.

In some implementations, the terminal 101 performs processing to obtain the first parameter.

In some implementations, step S3102 is omitted, and the terminal 101 autonomously implements the function indicated by the first parameter, or the function is autonomous or by default.

For optional implementations of step S3102, the optional implementations of step S2102 in FIG. 2 and another associated part in the embodiments of FIG. 2 may be referred to, and details will not be repeated here.

In step S3103, the first parameter is not obtained.

In some embodiments, when the network device 102 or another entity does not send the first parameter, the terminal 101 does not obtain the first parameter.

In some embodiments, the network device 102 or another entity sends the first parameter, but the terminal 101 does not obtain the first parameter.

For optional implementations of step S3103, the optional implementations of step S2103 in FIG. 2 and another associated part in the embodiments of FIG. 2 may be referred to, and details will not be repeated here.

In some embodiments, the terminal 101 performs step S3102 without performing step S3103.

In some embodiments, the terminal 101 performs step S3103 without performing step S3102.

In step S3104, a second parameter is obtained.

In some embodiments, the terminal 101 may receive the second parameter sent by the network device 102, or may receive the second parameter sent by another entity. For example, the second parameter may be forwarded by the network device 102 through another entity.

In some implementations, the terminal 101 obtains the second parameter specified by a protocol.

In some implementations, the terminal 101 performs processing to obtain the second parameter.

In some implementations, step S3104 is omitted, and the terminal 101 autonomously implements a function indicated by the second parameter, or the function is autonomous or default.

For optional implementations of step S3104, the optional implementations of step S2104 in FIG. 2 and another associated part in the embodiments of FIG. 2 may be referred to, and details will not be repeated here.

In step S3105, the second parameter is not obtained.

In some embodiments, when the network device 102 or another entity does not send the second parameter, the terminal 101 does not obtain the second parameter.

In some embodiments, the network device 102 or another entity sends the second parameter, but the terminal 101 does not obtain the second parameter.

For optional implementations of step S3105, the optional implementations of step S2105 in FIG. 2 and another associated part in the embodiments of FIG. 2 may be referred to, and details will not be repeated here.

In some embodiments, the terminal 101 performs step S3104 without performing step S3105.

In some embodiments, the terminal 101 performs step S3105 without performing step S3104.

In step S3106, at least one of the CSI report and the SRS is not sent.

For optional implementations of step S3106, the optional implementations of step S2106 in FIG. 2 and another associated part in the embodiments of FIG. 2 may be referred to, and details will not be repeated here.

In some embodiments, performing no transmission of at least one of the CSI report and the SRS may include not sending at least one of the CSI report and the SRS to the network device 102, but may also include not sending at least one of the CSI report and the SRS to another entity.

In step S3107, a CSI report is sent.

For optional implementations of step S3107, the optional implementations of step S2107 in FIG. 2 and another associated part in the embodiments of FIG. 2 may be referred to, and details will not be repeated here.

In some embodiments, sending the CSI report may be sending the CSI report to the network device 102, or may be sending the CSI report to another entity.

In some embodiments, the terminal 101 performs step S3106 without performing step S3107.

In some embodiments, the terminal 101 performs step S3107 without performing step S3106.

An embodiment of the present disclosure relates to an information processing method performed by a terminal 101, where the method includes the following step(s).

In step S3201, a first parameter is obtained.

For optional implementations of step S3201, the optional implementations of step S2102 in FIG. 2 and step S3102 in FIG. 3 as well as other associated parts in the embodiments of FIG. 2 and FIG. 3 may be referred to, and details will not be repeated here.

In step S3202, the CSI report is not sent.

In some embodiments, when the first parameter is received and the first parameter is not the first value, the CSI report is not sent, where the CSI report includes L1-RSRP.

For optional implementations of step S3202, the optional implementations of step S2106 in FIG. 2 and step S3106 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3301, a second parameter is obtained.

In some embodiments, the second parameter may be received from the network device 102, but may also be received from another entity.

In some embodiments, the second parameter may be obtained or determined by the terminal 101 according to a protocol.

In some embodiments, the second parameter may be obtained through processing by the terminal 101.

For optional implementations of step S3301, the optional implementations of step S2104 in FIG. 2 and step S3104 in FIG. 3 as well as other associated parts in the embodiments of FIG. 2 and FIG. 3 may be referred to, and details will not be repeated here.

In step S3302, the CSI report is not sent.

In some embodiments, when the second parameter is received and the second parameter is not the second value, the CSI report is not sent, where the CSI report does not include L1-RSRP.

For optional implementations of step S3302, the optional implementations of step S2106 in FIG. 2 and step S3106 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3401, the first parameter is not obtained.

In some embodiments, the first parameter may be received from the network device 102, but may also be received from another entity.

In some embodiments, the first parameter may be obtained or determined by the terminal 101 according to a protocol.

In some embodiments, the first parameter may be obtained through processing by the terminal 101.

For optional implementations of step S3401, the optional implementations of step S2102 in FIG. 2 and step S3102 in FIG. 3 as well as other associated parts in the embodiments of FIG. 2 and FIG. 3 may be referred to, and details will not be repeated here.

In step S3402, the CSI report is not sent.

In some embodiments, when the first parameter is not received, the CSI report is not sent, where the CSI report includes L1-RSRP.

For optional implementations of step S3402, the optional implementations of step S2106 in FIG. 2 and step S3106 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3501, the second parameter is not obtained.

In some embodiments, the second parameter may be received from the network device 102, but may also be received from another entity.

In some embodiments, the second parameter may be obtained or determined by the terminal 101 according to a protocol.

In some embodiments, the second parameter may be obtained through processing by the terminal 101.

For optional implementations of step S3501, the optional implementations of step S2104 in FIG. 2 and step S3104 in FIG. 3 as well as other associated parts in the embodiments of FIG. 2 and FIG. 3 may be referred to, and details will not be repeated here.

In step S3502, the CSI report is not sent.

In some embodiments, when the second parameter is not received, the CSI report is not sent, where the CSI report does not include L1-RSRP.

For optional implementations of step S3502, the optional implementations of step S2106 in FIG. 2 and step S3106 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3601, the first parameter is obtained.

In some embodiments, the first parameter may be received from the network device 102, but may also be received from another entity.

In some embodiments, the first parameter may be obtained or determined by the terminal 101 according to a protocol.

In some embodiments, the first parameter may be obtained through processing by the terminal 101.

For optional implementations of step S3601, the optional implementations of step S2102 in FIG. 2 and step S3102 in FIG. 3 as well as other associated parts in the embodiments of FIG. 2 and FIG. 3 may be referred to, and details will not be repeated here.

In step S3602, a CSI report is sent.

In some embodiments, in a case that the first parameter is received and the first parameter is the first value, the CSI report is sent, where the CSI report includes L1-RSRP.

For optional implementations of step S3601, the optional implementations of step S2107 in FIG. 2 and step S3107 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3701, a second parameter is obtained.

In some embodiments, the second parameter may be received from the network device 102, but may also be received from another entity.

In some embodiments, the second parameter may be obtained or determined by the terminal 101 according to a protocol.

In some embodiments, the second parameter may be obtained through processing by the terminal 101.

For optional implementations of step S3701, the optional implementations of step S2104 in FIG. 2 and step S3104 in FIG. 3 as well as other associated parts in the embodiments of FIG. 2 and FIG. 3 may be referred to, and details will not be repeated here.

In step S3702, a CSI report is sent.

In some embodiments, when the second parameter is received and the second parameter is not the second value, the CSI report is not sent, where the CSI report does not include L1-RSRP.

For optional implementations of step S3702, the optional implementations of step S2107 in FIG. 2 and step S3107 in FIG. 3 as well as other associated parts in the embodiments of FIG. 2 and FIG. 3 may be referred to, and details will not be repeated here.

An embodiment of the present disclosure relates to an information processing method performed by a terminal 101, which includes the following step(s).

In step S3801, at least one of the CSI report and the SRS is not sent.

For optional implementations of step S3801, the optional implementations of step S2106 in FIG. 2 and step S3106 in FIG. 3 as well as other associated parts in the embodiments of FIG. 2 and FIG. 3 may be referred to, and details will not be repeated here.

In some embodiments, in response to the terminal 101 being configured to monitor the wake-up signal and is not within the active time, at least one of the CSI report and the SRS is not sent. Optionally, when receiving the first parameter and the first parameter is the first value, the terminal 101 sends the CSI report, where the CSI report includes L1-RSRP. Optionally, when receiving the second parameter and the second parameter is the second value, the terminal 101 sends the CSI report, where the CSI report does not include L1-RSRP. Optionally, the terminal 101 sends at least one of the CSI report and the SRS on one or more carriers not associated with the wake-up signal.

In some embodiments, when the terminal 101 does not receive the first parameter or receives the first parameter and the first parameter is not the first value, the terminal 101 does not send the CSI report, where the CSI report includes L1-RSRP.

In some embodiments, when the terminal 101 does not receive the second parameter or receives the second parameter and the second parameter is not the second value, the terminal 101 does not send the CSI report, where the CSI report does not include L1-RSRP.

In some embodiments, the terminal 101 does not send at least one of the CSI report and the SRS on one or more carriers associated with the wake-up signal.

In some embodiments of the present disclosure, step S3801 may be combined with step S3101 in FIG. 3, or may be combined with step S3102 in FIG. 3, or may be combined with step S3104 in FIG. 3, but is not limited thereto.

An embodiment of the present disclosure relates to an information processing method performed by a terminal 101, which includes the following step(s).

In step S3901, a CSI report is sent.

For optional implementations of step S3901, the optional implementations of step S2107 in FIG. 2 and step S3107 in FIG. 3 as well as other associated parts in the embodiments of FIG. 2 and FIG. 3 may be referred to, and details will not be repeated here.

In some embodiments, when receiving the first parameter and the first parameter is the first value, the terminal 101 sends the CSI report, where the CSI report includes L1-RSRP.

In some embodiments, in a case that the terminal 101 receives the second parameter and the second parameter is the second value, the terminal 101 sends the CSI report, where the CSI report does not include L1-RSRP.

In some embodiments, the terminal 101 sends at least one of the CSI report and the SRS on one or more carriers not associated with the wake-up signal.

In some embodiments of the present disclosure, step S3901 may be combined with step S3101 in FIG. 3, or may be combined with step S3102 in FIG. 3, or may be combined with step S3104 in FIG. 3, but is not limited thereto.

FIG. 4 is a flowchart illustrating an information processing method according to an embodiment of the present disclosure. As shown in FIG. 4, an embodiment of the present disclosure relates to an information processing method performed by a network device 102, which includes the following step(s).

In step S4101, first information is sent.

Optionally, the network device 102 may send the first information to the terminal 101, or may forward the first information to the terminal 101 through another entity.

For optional implementations of step S4101, the optional implementations of step S2101 in FIG. 2 and another associated part in the embodiments of FIG. 2 may be referred to, and details will not be repeated here.

In step S4102, a first parameter is sent.

For optional implementations of step S4102, the optional implementations of step S2102 in FIG. 2 and another associated part in the embodiments of FIG. 2 may be referred to, and details will not be repeated here.

In step S4103, the first parameter is not sent.

For optional implementations of step S4103, the optional implementations of step S2103 in FIG. 2 and another associated part in the embodiments of FIG. 2 may be referred to, and details will not be repeated here.

In some embodiments, the network device 102 performs step S4102 without performing step S4103.

In some embodiments, the network device 102 performs step S4103 without performing step S4102.

In step S4104, a second parameter is sent.

For optional implementations of step S4104, the optional implementations of step S2104 in FIG. 2 and another associated part in the embodiments of FIG. 2 may be referred to, and details will not be repeated here.

In step S4105, the second parameter is not sent.

For optional implementations of step S4105, the optional implementations of step S2105 in FIG. 2 and another associated part in the embodiments of FIG. 2 may be referred to, and details will not be repeated here.

In some embodiments, the network device 102 performs step S4104 without performing step S4105.

In some embodiments, the network device 102 performs step S4105 without performing step S4104.

In step S4106, reception of at least one of the CSI report and the SRS is no expected.

For optional implementations of step S4106, the optional implementations of step S2106 in FIG. 2 and another associated part in the embodiments of FIG. 2 may be referred to, and details will not be repeated here.

In step S4107, a CSI report is received.

For optional implementations of step S4107, the optional implementations of step S2107 in FIG. 2 and another associated part in the embodiments of FIG. 2 may be referred to, and details will not be repeated here.

In some embodiments, the network device 102 performs step S4106 without performing step S4107.

In some embodiments, the network device 102 performs step S4107 without performing step S4106.

Some embodiments of the present disclosure relate to an information processing method, which is implemented by the network device 102 and includes the following step(s).

In step S4201, a first parameter is sent.

For optional implementations of step S4201, the optional implementations of step S2102 in FIG. 2 and step S4102 in FIG. 4 as well as other associated parts in the embodiments of FIG. 2 and FIG. 4 may be referred to, and details will not be repeated here.

In step S4202, reception of a CSI report is not expected.

In some embodiments, when the first parameter is sent and the first parameter is not the first value, the CSI report is not expected to be received, where the CSI report includes L1-RSRP.

For optional implementations of step S4202, the optional implementations of step S2106 in FIG. 2 and step S4106 in FIG. 4 as well as other associated parts in the embodiments of FIG. 2 and FIG. 4 may be referred to, and details will not be repeated here.

Some embodiments of the present disclosure relate to an information processing method, which is implemented by the network device 102 and includes the following step(s).

In step S4301, a second parameter is sent.

For optional implementations of step S4301, the optional implementations of step S2104 in FIG. 2 and step S4104 in FIG. 4 as well as other associated parts in the embodiments of FIG. 2 and FIG. 4 may be referred to, and details will not be repeated here.

In step S4302, reception of a CSI report is not expected.

In some embodiments, when the second parameter is sent and the second parameter is not the second value, the CSI report is not expected to be received, where the CSI report does not include L1-RSRP.

For optional implementations of step S4302, the optional implementations of step S2106 in FIG. 2 and step S4106 in FIG. 4 as well as other associated parts in the embodiments of FIG. 2 and FIG. 4 may be referred to, and details will not be repeated here.

Some embodiments of the present disclosure relate to an information processing method, which is executed by the network device 102 and includes the following step(s).

In step S4401, the first parameter is not sent.

For optional implementations of step S4401, the optional implementations of step S2103 in FIG. 2 and step S4103 in FIG. 4 as well as other associated parts in the embodiments of FIG. 2 and FIG. 4 may be referred to, and details will not be repeated here.

In step S4402, reception of a CSI report is not expected.

In some embodiments, when the first parameter is not sent, the CSI report is not expected to be received, where the CSI report includes L1-RSRP.

For optional implementations of step S4402, the optional implementations of step S2106 in FIG. 2 and step S4106 in FIG. 4 as well as other associated parts in the embodiments of FIG. 2 and FIG. 4 may be referred to, and details will not be repeated here.

Some embodiments of the present disclosure relate to an information processing method, which is executed by the network device 102 and includes the following step(s).

In step S4501, the second parameter is not sent.

For optional implementations of step S4501, the optional implementations of step S2105 in FIG. 2 and step S4105 in FIG. 4 as well as other associated parts in the embodiments of FIG. 2 and FIG. 4 may be referred to, and details will not be repeated here.

In step S4502, reception of a CSI report is not expected.

In some embodiments, when the second parameter is not sent, the CSI report is not expected to be received, where the CSI report does not include L1-RSRP.

For optional implementations of step S4502, the optional implementations of step S2106 in FIG. 2 and step S4106 in FIG. 4 as well as other associated parts in the embodiments of FIG. 2 and FIG. 4 may be referred to, and details will not be repeated here.

Some embodiments of the present disclosure relate to an information processing method, which is executed by the network device 102 and includes the following step(s).

In step S4601, the first parameter is sent.

For optional implementations of step S4601, the optional implementations of step S2102 in FIG. 2 and step S4102 in FIG. 4 as well as other associated parts in the embodiments of FIG. 2 and FIG. 4 may be referred to, and details will not be repeated here.

In step S4602, a CSI report is received.

In some embodiments, when the first parameter is sent and the first parameter is a first value, the CSI report is expected to be received, where the CSI report includes L1-RSRP.

For optional implementations of step S4602, the optional implementations of step S2107 in FIG. 2 and step S4107 in FIG. 4 as well as other associated parts in the embodiments of FIG. 2 and FIG. 4 may be referred to, and details will not be repeated here.

Some embodiments of the present disclosure relate to an information processing method, which is executed by the network device 102 and includes the following step(s).

In step S4701, the second parameter is sent.

For optional implementations of step S4701, the optional implementations of step S2104 in FIG. 2 and step S4104 in FIG. 4 as well as other associated parts in the embodiments of FIG. 2 and FIG. 4 may be referred to, and details will not be repeated here.

In step S4702, a CSI report is received.

In some embodiments, when the second parameter is sent and the second parameter is the second value, the CSI report is expected to be received, where the CSI report does not include L1-RSRP.

For optional implementations of step S4702, the optional implementations of step S2107 in FIG. 2 and step S4107 in FIG. 4 as well as other associated parts in the embodiments of FIG. 2 and FIG. 4 may be referred to, and details will not be repeated here.

Some embodiments of the present disclosure relate to an information processing method, which is executed by the network device 102 and includes the following step(s).

In step S4801, reception of at least one of the CSI report and the SRS is not expected.

For optional implementations of step S4801, the optional implementations of step S2106 in FIG. 2 and step S4106 in FIG. 4 as well as other associated parts in the embodiments of FIG. 2 and FIG. 4 may be referred to, and details will not be repeated here.

In some embodiments, in a case that the terminal 101 is configured to monitor the wake-up signal and is not within the active time, the network device 102 does not expect to receive at least one of the CSI report and the SRS. Optionally, when sending the first parameter and the first parameter is the first value, the network device 102 receives the CSI report, where the CSI report includes L1-RSRP. Optionally, when sending the second parameter and the second parameter is the second value, the network device 102 receives the CSI report, where the CSI report does not include L1-RSRP. Optionally, the network device 102 receives at least one of the CSI report and the SRS on one or more carriers not associated with the wake-up signal.

In some embodiments, when sending the first parameter and the first parameter is not the first value, the network device 102 does not expect to receive the CSI report, where the CSI report includes L1-RSRP. In some embodiments, when sending the second parameter and the second parameter is not the second value, the network device 102 does not expect to receive the CSI report, where the CSI report does not include L1-RSRP.

In some embodiments, the network device 102 does not expect to receive at least one of the CSI report and the SRS on the one or more carriers associated with the wake-up signal.

In some embodiments of the present disclosure, step S4801 may be combined with step S4101 in FIG. 4, or with step S4202 in FIG. 4, or with step S4104 in FIG. 4, etc., but is not limited thereto.

Some embodiments of the present disclosure relate to an information processing method, which is performed by a network device and includes the following step(s).

In step S4901, a CSI report is received.

For optional implementations of step S4901, the optional implementations of step S2107 in FIG. 2 and step S4107 in FIG. 4 as well as other associated parts in the embodiments of FIG. 2 and FIG. 4 may be referred to, and details will not be repeated here.

In some embodiments, the network device 102 receives the CSI report when sending the first parameter and the first parameter is the first value, where the CSI report includes L1-RSRP.

In some embodiments, the network device 102 receives the CSI report when sending the second parameter and the second parameter is the second value, where the CSI report does not include L1-RSRP.

In some embodiments, the network device 102 receives at least one of the CSI report and the SRS on one or more carriers not associated with the wake-up signal.

In some embodiments of the present disclosure, step S4901 may be combined with step S4101 in FIG. 4, or may be combined with step S4202 in FIG. 4, or may be combined with step S4104 in FIG. 4, but is not limited thereto.

FIG. 5 is a flowchart illustrating an information processing method according to an embodiment of the present disclosure. As shown in FIG. 5, some embodiments of the present disclosure relate to an information processing method for an information processing system 100, which includes the following step(s).

In step S5101, when the terminal is configured to monitor the wake-up signal and is not in the active time, the terminal does not send at least one of the CSI report and the SRS, and the network device does not expect to receive at least one of the CSI report and the SRS.

For optional implementations of step S5101, the method described in the related embodiments such as steps S2101-S2107 in FIG. 2, steps S3101-S3107 in FIG. 3, and step S4101-S4107 in FIG. 4 may be referred to, which will not be repeated here.

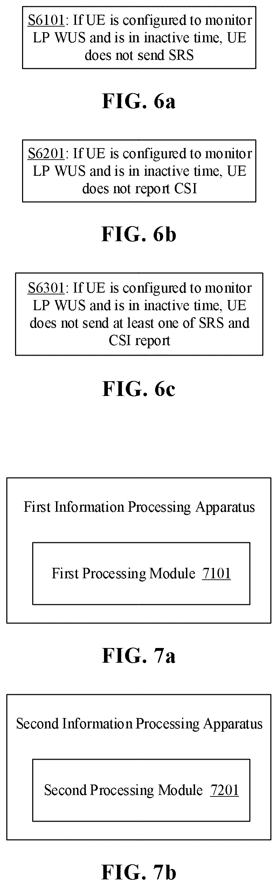

FIG. 6a is a flowchart illustrating an information processing method according to an embodiment of the present disclosure. As shown in FIG. 6a, some embodiments of the present disclosure relate to an information processing method, which includes the following step(s).

In step S6101, if UE is configured to monitor LP WUS and is in inactive time, the UE does not send SRS.

Optionally, the SRS includes a periodic SRS and/or a semi-persistent SRS.

In some embodiments, the UE corresponds to the terminal in any of the foregoing embodiments, and the LP WUS corresponds to the first signal in any of the foregoing embodiments.

In some embodiments, the UE does not send SRS on one or more carriers applied in the LP WUS inactive time.

FIG. 6b is a flowchart illustrating an information processing method according to an embodiment of the present disclosure. As shown in FIG. 6b, some embodiments of the present disclosure relate to an information processing method, which includes the following step(s).

In step S6201, if UE is configured to monitor LP WUS and is in inactive time, the UE does not report CSI report.

Optionally, the CSI report includes a periodic CSI report and/or a semi-persistent CSI report.

Optionally, the periodic CSI report is transmitted on PUCCH, and the semi-persistent CSI report may be classified into two cases of transmission on PUCCH and transmission on PUSCH. The CSI report may include one or more report parameters, such as channel quality indicator (CQI), precoding matrix indicator (PMI), CSI reference signal resource indicator (CRI), synchronization signal/physical broadcast channel block indicator (SSBRI), layer indicator (LI), rank indicator (RI), L1-RSRP, L1 Signal-to-Interferential plus Noise Ratio (L1-SINR), or capability set index.

In some embodiments, if the UE is configured with the first parameter (and the first parameter is set to a specific candidate value, for example, set to true), the UE reports a periodic CSI report including L1-RSRP. When the first parameter is not true, the periodic CSI report including L1-RSRP is not reported. The UE periodically reports L1-RSRP to the base station, so that the base station can learn of a relatively good beam in communication with the UE, thereby performing beam management.

In some embodiments, if the UE is configured with the second parameter (and the second parameter is set to a specific candidate value, for example, set to true), the UE reports a periodic CSI report that does not include L1-RSRP. When the second parameter is not true, the periodic CSI report that does not include L1-RSRP is not reported. The UE periodically reports CSI to the base station, so that the base station can know various channel conditions in communication with the UE, and the base station can use accurate channel information to schedule the UE after the UE wakes up.

In some embodiments, the UE does not send the CSI report on one or more carriers applied in the LP WUS inactive time.

In some embodiments, the LP WUS corresponds to the first signal or the wake-up signal in the aforementioned embodiments.

FIG. 6c is a flowchart illustrating an information processing method according to an embodiment of the present disclosure. As shown in FIG. 6c, some embodiments of the present disclosure relate to an information processing method.

In step S6301, if UE is configured to monitor LP WUS and is in inactive time, the UE does not send at least one of the SRS and the CSI report.

In some embodiments, for specific details of step S6301, optional implementations of step S6101 in FIG. 6a and optional implementations of step S6201 in FIG. 6b may be referred to, which will not be repeated here.

In some embodiments of the present disclosure, some or all of the steps and optional implementations thereof may be arbitrarily combined with some or all of the steps in other embodiments, or may be arbitrarily combined with optional implementations in other embodiments.

Some embodiments of the present disclosure further provide an apparatus for implementing any of the above methods, for example, provide an apparatus including units configured to implement the steps performed by the terminal in any of the above methods. For another example, another apparatus is further provided, including units configured to implement the steps performed by the network device (for example, access network device, core network function node, or core network device) in any one of the foregoing methods.

It should be understood that division of the units in the foregoing apparatus is merely logical function division, and in actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores computer instructions, and the processor invokes the computer instructions stored in the memory, to implement any one of the foregoing methods or implement functions of the units in the foregoing apparatus. Optionally, the processor is, for example, a general-purpose processor, such as a central processing unit (CPU) or a microprocessor, and the memory is a memory within the device or a memory outside the device. Alternatively and optionally, the units in the apparatus may be implemented in a form of a hardware circuit, and some or all functions of the units may be implemented by designing the hardware circuit, and the hardware circuit may be understood as one or more processors. For example, in an implementation, the hardware circuit is an application-specific integrated circuit (ASIC), and functions of some or all the units are implemented by designing a logical relationship between elements in the circuit. For another implementation, the hardware circuit may be implemented by using a programmable logic device (PLD). Taking a field programmable gate array (FPGA) as an example, the hardware circuit may include a large quantity of logic gate circuits, and a connection relationship between the logic gate circuits is configured by using a configuration file, to implement functions of some or all the units. All units of the foregoing apparatus may be implemented in a form of software invoked by a processor; or may be implemented in a form of a hardware circuit; or may be partially implemented in a form of software invoked by a processor, and a remaining part is implemented in a form of a hardware circuit.

In some embodiments of the present disclosure, the processor is a circuit having a signal processing capability. In an implementation, the processor may be a circuit having instruction reading and running capabilities, such as a central processing unit (CPU), a microprocessor, a graphics processing unit (GPU, which may be understood as a microprocessor), or a digital signal processor (DSP). In another implementation, the processor may implement a certain function through a logical relationship of a hardware circuit, and the logical relationship of the hardware circuit is fixed or reconfigurable. For example, the processor is a hardware circuit implemented by an application-specific integrated circuit (ASIC) or a programmable logic device (PLD), such as an FPGA. In the reconfigurable hardware circuit, a process in which the processor loads the configuration document to implement configuration of the hardware circuit may be understood as a process in which the processor loads instructions to implement functions of some or all of the foregoing units. In addition, it can also be a hardware circuit designed for artificial intelligence, which can be understood as a ASIC, such as a Neural Network Processing Unit (NPU), a Tensor Processing Unit (TPU), a Deep learning Processing Unit (DPU), and the like.

FIG. 7a is a block diagram of a first information processing apparatus according to an embodiment of the present disclosure. As shown in FIG. 7a, the first information processing apparatus 7100 includes: a first processing module 7101, configured to, in response to a terminal being configured to monitor a wake-up signal and being not in active time, perform no transmission of at least one of CSI report and SRS. Optionally, the first processing module 7101 is specifically configured to perform processing-related steps in related embodiments of the terminal side, for example, steps S2106, S2107, and S3101-S3107 in the foregoing embodiments, which will not be repeated here.

FIG. 7b is a block diagram of a second information processing apparatus according to an embodiment of the present disclosure. As shown in FIG. 7b, the second information processing apparatus 7200 includes: a second processing module 7201, configured to, in response to a terminal being configured to monitor a wake-up signal and being not in active time, expect no reception of at least one of CSI report and SRS. Optionally, the second processing module 7201 is specifically configured to perform processing-related steps in related embodiments of the network device side, such as steps S2101-S2105 and S4101-S4107 in the above embodiments, which will not be repeated here.

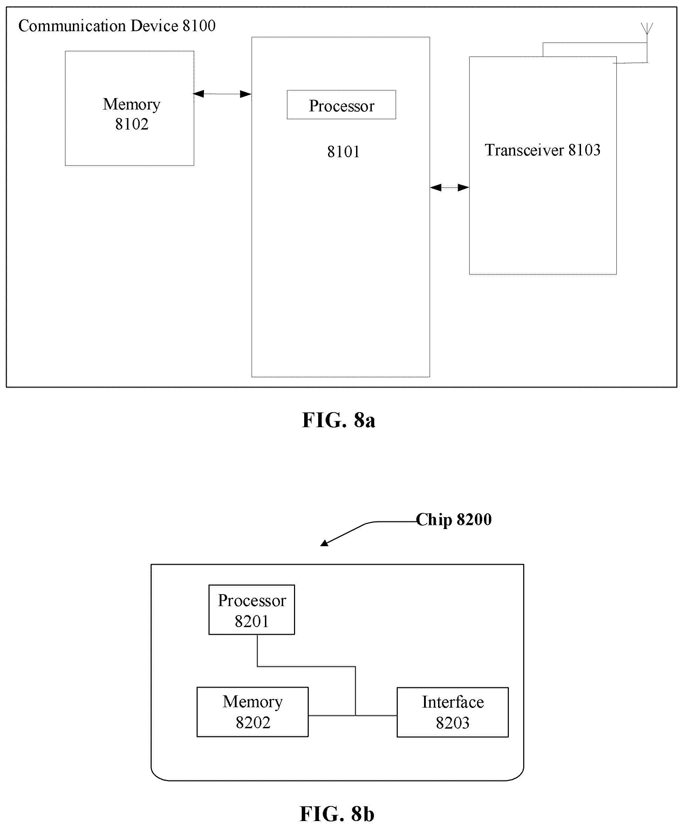

FIG. 8a is a block diagram of a communications device 8100 according to an embodiment of this disclosure. The communications device 8100 may be a network device (for example, an access network device or a core network device), a terminal (for example, user equipment); or a chip, a chip system, a processor, or the like that supports the network device in implementing any one of the foregoing methods; or a chip, a chip system, a processor, or the like that supports the terminal in implementing any one of the foregoing methods. The communication device 8100 can be configured to implement the method described in the foregoing method embodiments. For details, the descriptions in the foregoing method embodiments may be referred to.

As shown in FIG. 8a, the communication device 8100 includes one or more processors 8101, and the processor 8101 is configured to invoke instructions to enable the communication device 8100 to perform any one of the foregoing methods.

Optionally, the communication device 8100 further includes one or more memories 8102 configured to store computer instructions. In an optional embodiment, all or a part of the memories 8102 may alternatively be located outside the communication device 8100.

Optionally, the communications device 8100 further includes one or more transceivers 8103. When the communication device 8100 includes one or more transceivers 8103, communication steps such as sending and receiving in the foregoing methods are performed by the transceiver 8103, and other steps are performed by the processor 8101.

The communication device 8100 described in the above embodiments may be a network device or a terminal, but the scope of the communication device 8100 described in the present disclosure is not limited thereto, and the structure of the communication device 8100 may not be limited by FIG. 8a. Optionally, the communication device may be an independent device or may be a part of a larger device. For example, the communications device may be at least one of the following: (1) an independent integrated circuit IC, or a chip, or a chip system or subsystem; (2) a set having one or more ICs, where optionally, the IC set may also include a storage component configured to store data and a computer program; an (3) ASIC, for example, a modem; (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, or the like; or (6) another device.

FIG. 8b is a block diagram of a chip 8200 according to an embodiment of the present disclosure. For a case in which the communication device 8100 may be a chip or a chip system, a schematic diagram illustrating a structure of a chip 8200 shown in FIG. 8b may be referred to.

The chip 8200 includes one or more processors 8201, and the processor 8201 is configured to invoke computer instructions to enable the chip 8200 to perform any one of the foregoing methods.

Optionally, the chip 8200 further includes one or more memories 8202 configured to store computer instructions. In alternative embodiments, all or a part of memories 8202 may be external to chip 8200.

Optionally, the chip 8200 further includes one or more interfaces 8203, the interface 8203 is connected to the memory 8202, the interface 8203 may be configured to receive a signal from the memory 8202 or another apparatus, and the interface 8203 may be configured to send a signal to the memory 8202 or another apparatus. For example, the interface 8203 may read computer instructions stored in the memory 8202, and send the computer instructions to the processor 8201.

In some embodiments, terms such as interface, interface circuit, transceiver pin, and transceiver may be replaced with each other.

The present disclosure further provides a readable storage medium, where the readable storage medium stores computer instructions, and when the computer instructions are run on the communication device 8100, the communication device 8100 is enabled to perform any one of the foregoing methods. Optionally, the computer-readable storage medium may be a non-transitory computer-readable storage medium, or may be a transitory computer-readable storage medium.

The present disclosure further provides a computer program product that, when executed by the communication device 8100, causes the communication device 8100 to perform any of the above methods.

Other embodiments of the present disclosure will be apparent to those skilled in the art from consideration of the specification and practice of the present disclosure disclosed herein. This disclosure is intended to cover any variations, uses, or adaptations of the disclosure following the general principles thereof and including common knowledge or customary practice in the art, which are not disclosed in the present disclosure. It is intended that the specification and examples be considered as exemplary only, with a true scope and spirit of the invention being indicated by the following claims.

It should be understood that the present disclosure is not limited to the precise structures described above and shown in the drawings, and various modifications and changes may be made without departing from the scope thereof. The scope of the present disclosure is limited only by the appended claims.

## Claims

1. An information processing method, being performed by a terminal and comprising:
in response to the terminal being configured to monitor a wake-up signal and being not in active time, performing no transmission of at least one of a channel state information CSI report and a sounding reference signal SRS by the terminal.

2. The method according to claim 1, wherein the SRS comprises at least one of the following: a periodic SRS and a semi-persistent SRS.

3. The method according to claim 1 or 2, wherein the CSI report comprises at least one of the following: a periodic CSI report and a semi-persistent CSI report.

4. The method according to any one of claims 1 to 3, wherein performing no transmission of the CSI comprises:
in response to not receiving a first parameter or in response to receiving the first parameter and the first parameter is not a first value, performing no transmission of the CSI report; wherein the CSI report comprises a layer-1 reference signal receiving power L1-RSRP.

5. The method according to any one of claims 1 to 3, wherein,
in response to receiving a first parameter and the first parameter is a first value, performing transmission of the CSI report; wherein the CSI report comprises a L1-RSRP.

6. The method according to any one of claims 1 to 5, wherein performing no transmission of the CSI report comprises:
in response to not receiving a second parameter or in response to receiving the second parameter and the second parameter is not a second value, performing no transmission of the CSI report; wherein the CSI report does not comprise a L1-RSRP.

7. The method according to any one of claims 1 to 5, wherein,
in response to receiving a second parameter and the second parameter is a second value, performing transmission of the CSI report; wherein the CSI report does not comprise a L1-RSRP.

8. The method according to any one of claims 1 to 7, wherein performing no transmission of at least one of the CSI report and the SRS comprises:
performing no transmission of at least one of the CSI report and the SRS on one or more carriers associated with the wake-up signal.

9. An information processing method, being performed by a network device and comprising:
in response to a terminal being configured to monitor a wake-up signal and being not in active time, expecting no reception of at least one of a channel state information CSI report and a sounding reference signal SRS by the network device.

10. The method according to claim 9, wherein the SRS comprises at least one of the following: a periodic SRS and a semi-persistent SRS.

11. The method according to claim 9 or 10, wherein the CSI report comprises at least one of the following: a periodic CSI report and a semi-persistent CSI report.

12. The method according to any one of claims 9 to 11, wherein expecting no reception of the CSI report comprises:
in response to not sending a first parameter or in response to sending the first parameter and the first parameter is not a first value, expecting no reception of the CSI report; wherein the CSI report comprises a layer-1 reference signal receiving power L1-RSRP.

13. The method according to any one of claims 9 to 11, wherein,
in response to sending a first parameter and the first parameter is a first value, expecting reception of the CSI report; wherein the CSI report comprises a L1-RSRP.

14. The method according to any one of claims 9 to 13, wherein expecting no reception of the CSI report comprises: in response to not sending a second parameter or in response to sending the second parameter and the second parameter is not a second value, expecting no reception of the CSI report; wherein the CSI report does not comprise a L1-RSRP.

15. The method according to any one of claims 9 to 13, wherein
in response to sending a second parameter and the second parameter is a second value, expecting reception of the CSI report; wherein the CSI report does not comprise a L1-RSRP.

16. The method according to any one of claims 9 to 15, wherein expecting no reception of at least one of the CSI report and the SRS comprises:
expecting no reception of at least one of the CSI report and the SRS on one or more carriers associated with the wake-up signal.

17. An information processing method, being applied to an information processing system, wherein the information processing system comprises a terminal and a network device, and the method comprises:
in response to the terminal being configured to monitor a wake-up signal and being not in active time, performing, by the terminal, no transmission of at least one of a channel state information CSI report and a sounding reference signal SRS, and expecting, by the network device, no reception of at least one of the CSI report and the SRS.

18. A first information processing device, comprising:
a first processing module, configured to, in response to a terminal being configured to monitor a wake-up signal and being not in active time, perform no transmission of at least one of a channel state information CSI report and a sounding reference signal SRS.

19. A second information processing device, comprising:
a second processing module, configured to, in response to a terminal being configured to monitor a wake-up signal and being not in active time, expect no reception of at least one of a channel state information CSI report and a sounding reference signal SRS.

20. A communication device, comprising:
one or more processors;
wherein the processor is configured to, through calling an instruction, cause the communication device to implement the information processing method according to any one of claims 1 to 8 or claims 9 to 16.

21. An information processing system, comprising: a terminal and a network device;
wherein the terminal is configured to implement the information processing method according to any one of claims 1 to 8; and
the network device is configured to implement the information processing method according to any one of claims 9 to 16.

22. A storage medium storing an instruction, wherein the instruction, upon being executed on a communication device, causes the communication device to implement the information processing method according to any one of claims 1 to 8 or claims 9 to 16.
